# EUROPEAN PATENT APPLICATION

(11) **EP 3 343 477 A1**
(43) Date of publication of application: **04.07.2018**
(21) Application number: 16838446.9
(22) Date of filing: 19.07.2016
(51) Int. Cl.: G06Q 10/06

(54) **REMOTE ACCOUNTING PROCESSING METHOD AND SYSTEM**

(30) Priority: 26.08.2015 CN 201510531129
(71) Applicant: Pan, Weijun, Zhongshan, Guangdong 528499 (CN)
(72) Inventor: Pan, Weijun, Zhongshan, Guangdong 528499 (CN)
(74) Representative: Klunker IP Patentanwälte PartG mbB
(86) International application number: PCT/CN2016/090528
(87) International publication number: WO 2017/032186

(57) **Abstract**

A remote accounting processing method, and a remote accounting processing system executing the method is provided. The method includes converting a transaction document into an electronic image and uploading the electronic image via a terminal and a network to a remote server for saving, recognizing information about the electronic image, and classifying and inputting same to a corresponding pre-set item for data computing and saving same by the remote server and feeding back the information of processed data to the terminal via the network by the remote server. The present invention processes account data of an enterprise, analyzes and classifies financial items and computes financial data in time, and help the enterprise to know financial information about the enterprise at any time, and can also realize automatic processing of transaction documents and automatic tax returns/analysis of the financial data, so that financial processing in accountancy is more rapid and convenient.

## Description

### FIELD OF THE INVENTION

The present invention relates to the field of accounting, and more particularly to a method and system for remote accounting processing.

### BACKGROUND OF THE INVENTION

Existing enterprises are limited to the need to use transaction documents for accounting work; however, as the collection of transaction documents takes time, it is general that the specific financial and accounting information of a previous month cannot be settled until as early as in the middle of a subsequent month; and sometimes, it even takes several months to know the specific financial and accounting information of a company. This is not conducive to timely computation and adjustments of the data and assets of the company, and is not conducive to more planned development of the company, especially large-scale enterprise projects with particularly large and detailed ledger data, which are difficult for timely classification for understanding, thus making it impossible to perform real-time financial monitoring such that even if a problem occurred it would be impossible to timely correct it. Current accounting tasks are manually processed, and there are still no automated processing functions.

Therefore, how to solve the above problems in corporate finance is a technical problem that is desperately needed to be solved.

### BRIEF SUMMARY OF THE INVENTION

The main object of the present invention is to provide a remote accounting processing method and system, which aims to achieve processing of financial data of an enterprise, making timely computation of projects and ledger data, and knowing an enterprise's accounting information at any time, and may also achieve automated processing of transaction documents, making the accounting industry faster and more efficient.

The present invention proposes a remote accounting processing method, comprising the steps of:
A. converting a transaction document into an electronic image and uploading the electronic image via a terminal and a network to a remote server for saving;
B. the remote server recognizing information about the electronic image, and classifying and inputting the information into corresponding preset items for data computing and saving;
C. the remote server feeding back the information of processed data to the terminal via the network.

Preferably, the step A further comprises: photographing or scanning a transaction document into an electronic image, and in a network-encrypted manner, uploading the electronic image to the remote server by means of an APP client end preset by a mobile terminal or a preset system software of PC or a web-based client end.

Preferably, the step B further comprises: the remote server automatically or manually (by accounting practitioners) operating to recognize information about the electronic image in a preset transaction document mode, and automatically or manually (by accounting practitioners) classifying and inputting the information into corresponding preset items for data computing and saving.

Preferably, the step of the remote server recognizing information about the electronic image in the step B further comprises the following step of: when the remote server automatically or manually recognizes, in a preset transaction document mode, that the electronic image is erroneous or unrecognizable, manually operating to directly intervene for correction, or performing a conversation session through the communication platform for correction with the terminal which uploaded the corresponding electronic image.

Preferably, after the step C, the following step is further included: when the feedback information received by the terminal is erroneous, the terminal may correct the data of the remote server according to the preset permissions or directly connect with the remote server through the communication platform to perform a manual conversation session for correction.

Preferably, a step D is further included, wherein the remote server may be connected, via network connection, with a computer network of other organizations or a local national tax office's tax filing system or a system of a department such as a governmental organization or non-governmental organization; by a preset date, the remote server may upload the financial data of the enterprise manually or automatically, so as to file tax returns or carry out other operations such as data analysis; also used to automatically generate accounting and management reports adapted to various organizations, for use of corporate management personnel, other professionals (such as accountants, tax agents) or government personnel for audit, tax filing, management and other purposes.

Also proposed is a remote accounting processing system, comprising:
a mobile terminal having a photographing or scanning function and preset with an APP client end for converting a transaction document into an electronic image and uploading said electronic image to a remote server via network encryption;
a remote server configured to recognize information about the electronic image and classify and input the information into corresponding preset items for data computing and saving, said remote server feeding back the information of said processed data to said mobile terminal via a network.

Preferably, PC can also be included, and the PC is preset with a system software for uploading the electronic image of the transaction documents to said remote server in a network-encrypted manner.

Preferably, a web-based client end is further included, and the web-based client end may log in online for uploading the electronic image of the transaction documents to the remote server in a network-encrypted manner.

Preferably, the remote server is further configured to automatically or manually recognize, in the preset transaction document mode, information about the electronic image, and to automatically or manually (by accounting practitioners) classify and input the information into corresponding preset items for data computing and saving; when the electronic image is automatically recognized in the preset transaction document mode as erroneous or unrecognizable, to manually (by accounting practitioners) operate to directly intervene for correction, or to perform a conversation session with the electronic image upload terminal through a communication platform for correction;
the mobile terminal or PC or web-based client end is further configured to correct the data of the remote server according to the preset permissions or to directly connect with the remote server through the communication platform to perform a manual conversation session for correction when the received feedback information is erroneous.

Preferably, the remote server is further configured to connect, via network connection, with a computer network of other organizations or a local national tax office's tax filing system or a system of a department such as a governmental organization or non-governmental organization; by a preset date, the remote server may upload the financial data of the enterprise manually or automatically, so as to file tax returns or carry out other operations such as data analysis; also used to automatically generate accounting and management reports adapted to various organizations, for use of corporate management personnel, other professionals (such as accountants, tax agents) or government personnel for audit, tax filing, management and other purposes.

A remote accounting processing method and system according to the present invention converts a transaction document into an electronic image and uploads the electronic image, via a terminal and a network, to a remote server for saving; the remote server recognizes information about the electronic image, and classifies and inputs the information into corresponding preset items for data computing and saving; the remote server feeds back the information of processed data to the terminal via the network; the remote server can communicate with a computer network of other organizations or a local national tax office's tax filing system or a computer network of a government organization; by a preset date, the remote server may upload the financial data of the enterprise manually or automatically, so as to file tax returns or carry out other operations such as data analysis; also used to automatically generate accounting and management reports adapted to various organizations, for use of corporate management personnel, other professionals (such as accountants, tax agents) or government personnel for audit, tax filing, management and other purposes.

Corporate financial personnel can, at anytime and anywhere, record transaction documents through the mobile terminal according to the present system; can save the transaction documents in real time, and perform timely computation of corporate projects and ledger data through a unified remote server; can, at anytime, understand the corporate accounts information; and filing tax returns can also be performed automatically, thus making the accounting industry faster and more efficient.

When the government can accept to use electronic images of transaction documents to perform financial auditing and various tax-related operations, and the use of the method and system according to the present invention can immediately achieve paperless operation, and then it will no longer need to keep a huge volume of transaction documents and bills; the accounting industry will be a network-operated industry, which enables national electronical network-based operation and memorandum, and the accounting industry will be more efficient, and the inspection by a national tax department will be more convenient.

### BRIEF DESCRIPTION OF THE DRAWINGS

FIG. 1 is a schematic diagram of an embodiment of a remote accounting method according to the present invention;
FIG. 2 is a schematic diagram of another embodiment of a remote accounting method according to the present invention;
FIG. 3 is a schematic diagram of an embodiment of a remote accounting processing system according to the present invention.

The achievement, functional characteristics and advantages of the object of the present invention will be further described in conjunction with the embodiments, with reference to the accompanying drawings.

### DETAILED DESCRIPTION OF THE INVENTION

It should be appreciated that the preferred embodiments described herein are merely used to explain the present invention, and are not intended to limit the present invention.

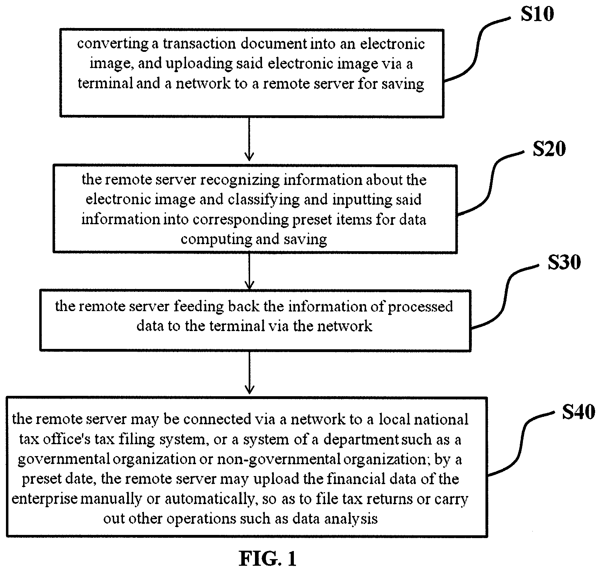

Referring to FIG. 1, an embodiment of a remote accounting processing method of the present invention is proposed, which includes the following steps:
A. converting a transaction document into an electronic image, and uploading said electronic image via a terminal and a network to a remote server for saving S10; transferring via a remote network.
B. the remote server recognizing information about the electronic image and classifying and inputting said information into corresponding preset items for data computing and saving S20; the preset items including corporate self-determined names such as catering, office supplies, materials, reception, travel and more.
C. the remote server feeding back the information of processed data to the terminal via the network S30; this facilitates timely knowing of whether the upload is successful and whether the uploaded data items are erroneous.
D. the remote server is connected via a network to a local national tax office's tax filing system, or a system of a department such as a governmental organization or non-governmental organization; by a preset date, the remote server may upload the financial data of the enterprise manually or automatically, so as to file tax returns or carry out other operations such as data analysis S40.

The remote server is modified according to the needs of different professionals, such as professional accountants, lawyers, corporate executives and so on; and the server operating interface is also modified according to the needs; and permissions are also different.

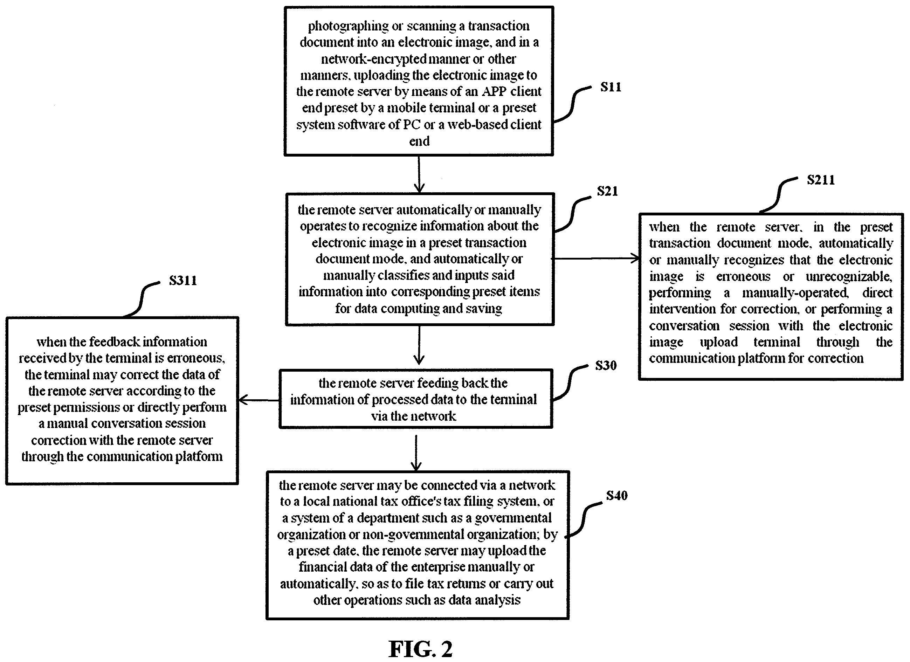

Referring to FIG. 2, the step A further comprises: photographing or scanning a transaction document into an electronic image, and in a network-encrypted manner or other manners, uploading the electronic image to the remote server by means of an APP (Application, a third-party application of smartphone) client end preset by a mobile terminal or a preset system software of PC or a web-based client end S11. The mobile terminal includes a mobile phone, a tablet computer and the like. The preset APP is a software that develops functions suitable for the present invention, and can upload images, automatically receive data, and is a communication platform which enables text or voice messages.

The preset permissions include an ordinary user end, a view-only user end, a privileged user end and a management user end. The ordinary user end can only upload transaction document information, the view-only user end can only view account information, and the privileged user end can upload transaction documents as well as viewing and modifying account information; the ordinary user end, the view-only user end and the privileged user end each have their own account ID number and password; the management user end can set the permissions of each account ID number; using by multiple people at the same time is enabled.

The step B further includes: the remote server automatically or manually operating to recognize information about the electronic image in a preset transaction document mode, and automatically or manually classifying and inputting said information into corresponding preset items for data computing and saving S21. The preset transaction document mode is automatically recognized according to fixed formats of invoice. Each type of invoice has its own fixed format. The fixed format of each type of invoice is recorded into the remote server in advance; once the electronic image of transaction documents is applied on, it can immediately be recognized.

The step of the remote server recognizing the electronic image information in the step B further comprises the following step of: when the remote server, in the preset transaction document mode, automatically or manually recognizes that the electronic image is erroneous or unrecognizable, performing a manually-operated, direct intervention for correction, or performing a conversation session with the electronic image upload terminal through the communication platform for correction S211. When the transaction document is not recognized automatically, the remote server will automatically prompt manual intervention for recognition.

After the step C, the following step is further included: when the feedback information received by the terminal is erroneous, the terminal may correct the data of the remote server according to the preset permissions or directly perform a manual conversation session correction with the remote server through the communication platform S311. Some of the terminals have passwords or permissions to modify the data; those terminals without permissions may communicate with the backend through the communication platform via text or voices for correction. The remote server sorts outs a number of databases and can separately compute on the financial accounts of different companies so as to realize processing of the financial accounts of several enterprises, and can realize processing of the financial accounts of enterprises in different places (nationwide or even worldwide) via network. This will be the direction of future development of the accounting profession.

Corporate financial personnel can, at anytime and anywhere, record transaction documents through the mobile terminal according to the present system; can save the transaction documents in real time, and perform timely computation of corporate projects and ledger data through a unified remote server; can, at anytime, understand the corporate accounts information; and filing tax returns can also be performed automatically, thus making the accounting industry faster and more efficient. When the government can accept to use electronic images of transaction documents to perform financial auditing and various tax-related operations, and the use of the method and system according to the present invention can immediately achieve paperless operation, and then it will no longer need to keep a huge volume of transaction documents and bills; the accounting industry will be a network-operated industry, which enables national electronical network-based operation and memorandum, and the accounting industry will be more efficient, and the inspection by a national tax department or government organization will be more convenient.

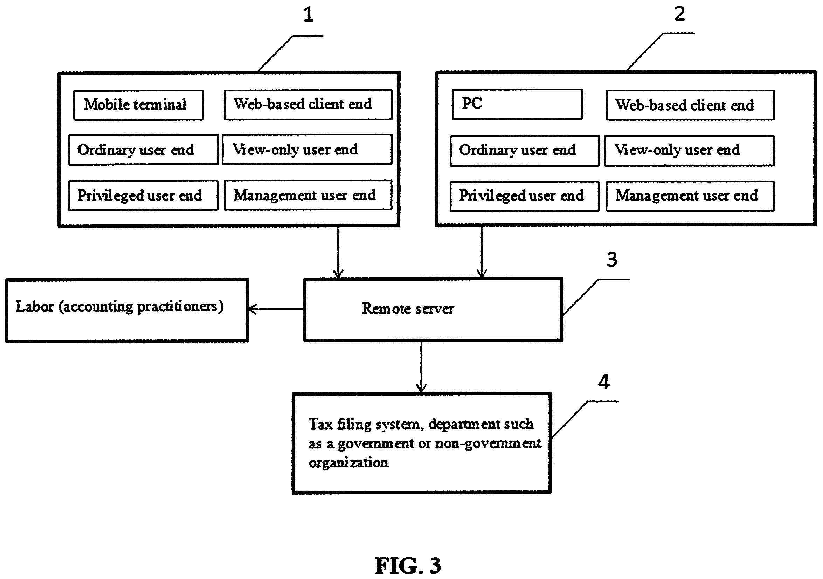

Referring to Fig. 3, a remote accounting processing system is proposed, comprising:
a mobile terminal 1 with a photographing or scanning function and preset with an APP client end for converting a transaction document into an electronic image and uploading said electronic image to a remote server 3 through network encryption;
the remote server 3 configured to recognize information about said electronic image, and to classify and input said information into corresponding preset items for data computing and saving, said remote server 3 feeding back the information of processed data to said mobile terminal 1 via a network.

A PC 2 is further included, said PC 2 preset with a system software for uploading the electronic image of the transaction documents to said remote server 3 in a network-encrypted manner.

A web-based client end (a web application that uses a web browser to access over a network such as the Internet or Intranet) is further included, wherein said web-based client end can log in online, and upload an electronic image of transaction document to said remote server 3 in a network-encrypted manner.

The remote server 3 is further configured to, in a preset transaction document mode, automatically or manually recognize information about the electronic image, and to classify and input said information into corresponding preset items for data computing and saving; when the remote server, in the preset transaction document mode, automatically recognizes that the electronic image is erroneous or unrecognizable, to perform a manually-operated, direct intervention for correction, or perform a conversation session with the electronic image upload terminal through the communication platform for correction.

The mobile terminal 1 or PC 2 or web-based client end is further configured to correct the data of the remote server 3 according to preset permissions or directly perform a manual conversation session with the remote server 3 through the communication platform for correction, when the received feedback information is erroneous.

The mobile terminal 1 or PC 2 or web-based client end is respectively preset with various permissions. The permissions include ordinary user end, view-only user end, privileged user end and management user end. The ordinary user end can only upload transaction document information; the view-only user end can only view account information; the privileged user end can upload transaction documents as well as viewing and modifying account information; the ordinary user end, the view-only user end and the privileged user end each have their own account ID number and password; the management user end can set the permissions of each account. Also responsive to the login of different professionals, the display interface or permissions will be automatically replaced.

The remote server 3 is further configured to connect via a network to a tax filing system, or a system of a department 4 such as a government organization or non-governmental organization; by a preset date, the remote server 3 may upload the financial data of the enterprise manually or automatically, so as to file tax returns or carry out other operations such as data analysis. The remote server 3 is also used to automatically generate accounting and management reports adapted to various organizations, such as for audit, tax filing, management and other purposes. And the computer networks of other organizations or the tax filing system of a local national tax office or the government organizations may arbitrarily extract some of the original documents for review; the remote server 3 can also automatically and conveniently extract the original documents because each document has a serial number; and by inputting any serial number desired, the document can immediately be extracted automatically; and it is also possible to automatically extract a desired number of documents according to the type of the documents.

The functions of the mobile terminal 1, PC 2, web-based client end, remote server 3 and so on according to the present system include all the functions of the above method and will not be repeated here.

Corporate financial personnel can, at anytime and anywhere, record transaction documents through the mobile terminal 1 according to the present system; can save the transaction documents in real time, and perform timely computation of corporate projects and ledger data through a unified remote server 3; can, at anytime, understand the corporate accounts information; and can file tax returns automatically, and automatically generate accounting and management reports adapted to various organizations, such as for audit, tax filing, management and other purposes, thus making the accounting industry faster and more efficient.

When the government can accept to use electronic images of transaction documents to perform financial auditing and various tax-related operations, and the use of the method and system according to the present invention can immediately achieve paperless operation, and then it will no longer need to keep a huge volume of transaction documents and bills; the accounting industry will be a network-operated industry, which enables national electronical network-based operation and memorandum, and the accounting industry will be more efficient, and the inspection by a national tax department or government organization will be more convenient.

The above description is only preferred embodiments of the present invention, and does not limit the scope of the present invention. All equivalent structural changes made by using the contents contained in the description and accompanying drawings of the present invention, no matter applied to other relevant technical fields directly or indirectly, shall, for the same reasons, also be included within the patent protection scope of the present invention.

## Claims

1. A remote accounting processing method, comprising the steps of:
a. converting a transaction document into an electronic image, and uploading said electronic image via a terminal and a network to a remote server for saving;
b. recognizing information of said electronic image, classifying and inputting said information into corresponding preset items for data computing and saving by the remote server; and
c. feeding back the information of processed data to the terminal via the network by the remote server.

2. The remote accounting processing method according to claim 1, wherein the step a further comprises: photographing or scanning a transaction document into an electronic image; and in a network-encrypted manner or non-encrypted manner, uploading said electronic image to said remote server by means of an APP client end preset by a mobile terminal or a preset system software of PC or a web-based client end.

3. The remote accounting processing method according to claim 1, wherein the step b further comprises: the remote server, in a preset transaction document mode, automatically or manually operating to recognize information about said electronic image, and automatically or manually classifying and inputting said information into corresponding preset items for data computing and saving.

4. The remote accounting processing method according to claim 3, wherein the step of recognizing the electronic image information by the remote server in said step b further comprises the following step of: when the remote server, in the preset transaction document mode, automatically or manually recognizes that the electronic image is erroneous or unrecognizable, performing a manually-operated, direct intervention for correction, or performing a conversation session through the communication platform for correction with the terminal which uploaded the corresponding electronic image.

5. The remote accounting processing method according to claim 4, wherein after said step c, the following step is further included: when the feedback information received by the terminal is erroneous, the terminal being able to correct the data of the remote server according to preset permissions or directly perform a manual conversation session correction with the remote server through the communication platform.

6. The remote accounting processing method according to claim 1, further comprising a step d, in which the remote server may be connected via a network to a local national tax office's tax filing system, or a system of a department such as a governmental organization or non-governmental organization; by a preset date, the remote server may upload the financial data of an enterprise manually or automatically, so as to file tax returns or carry out other operations such as data analysis.

7. A remote accounting processing system, comprising:
a mobile terminal having a photographing or scanning function and preset with an APP client end for converting a transaction document into an electronic image and uploading said electronic image to a remote server through network encryption;
the remote server being configured to recognize information about said electronic image and to classify and input said information into corresponding preset items for data computing and saving, said remote server feeding back the information of processed data to said mobile terminal via a network.

8. The remote accounting processing system according to claim 7, further comprising a PC, wherein said PC is preset with a system software for uploading the electronic image of the transaction documents to said remote server in a network-encrypted manner; and further comprising a web-based client end, wherein said web-based client end may upload the electronic image of the transaction documents via a network to said remote server in a network-encrypted manner.

9. The remote accounting processing system according to claim 8, wherein the remote server is further configured to automatically or manually recognize, in a preset transaction document mode, information about the electronic image, and to automatically or manually classify and input the information into corresponding preset items for data computing and saving; when the electronic image is automatically or manually recognized in the preset transaction document mode as erroneous or unrecognizable, to manually operate to directly intervene for correction, or to perform a conversation session with said electronic image upload terminal through a communication platform for correction;
the mobile terminal or PC or web-based client end is further configured to correct the data of said remote server according to preset permissions or to directly connect with said remote server through said communication platform to perform a manual conversation session for correction when the received feedback information is erroneous.

10. The remote accounting processing system according to claim 7, wherein the remote server may further be connected via a network to a local national tax office's tax filing system, or a system of a department such as a governmental organization or non-governmental organization; by a preset date, the remote server may upload the financial data of an enterprise manually or automatically, so as to file tax returns or carry out other operations such as data analysis; and may also automatically generate accounting and management reports adapted to various organizations, for use of corporate management personnel, professionals or government personnel for audit, tax filing, management and other purposes.
